# EUROPÄISCHE PATENTANMELDUNG

(11) **EP 1 388 632 A2**
(43) Veröffentlichungstag der Anmeldung: **11.02.2004**
(21) Anmeldenummer: 03012364.0
(22) Anmeldetag: 30.05.2003
(51) Int. Cl.: E05F 5/10, E05D 3/06, E05D 5/08

(54) **Schwenkdämpfer**

(30) Priorität: 09.08.2002 DE 20212335 U
(71) Anmelder: Arturo Salice S.p.A., I-22060 Novedrate (Como) (IT)
(72) Erfinder:
(74) Vertreter: Gossel, Hans K., Dipl.-Ing.

(57) **Zusammenfassung**

Ein Schwenkdämpfer, der beispielsweise die Stoßwirkung der Schließbewegung von Türen, Möbeltüren oder Klappen dämpft, entfaltet auch bei Beaufschlagung über kleine Winkelbereiche eine große Brems- und Dämpfungskraft durch einen äußeren zylindrischen Körper, der einen relativ zu diesen schwenkbaren inneren Körper einfasst. Zwischen den beiden Körpern sind zwei durch einen Spalt oder eine Drosselstelle voneinander getrennte und mit einer Flüssigkeit gefüllte Kammern vorhanden. Die Flüssigkeit wird durch die relative Drehung der beiden Körper zueinander von der einen Kammer in die andere verdrängt.

## Beschreibung

Die Erfindung betrifft einen Schwenkdämpfer.

Beispielsweise zur Dämpfung der Schließbewegung von Türen, Möbeltüren oder Klappen im Schließbereich, um die Stoßwirkung beim Anschlagen in die Schließstellung zu vermeiden, sind Dämpfungseinrichtungen erforderlich, die ihre Dämpfungswirkung auch über kleine Winkelbereich zu entfalten vermögen.

Aus DE 201 04 100 U1 ist eine Dämpfungsvorrichtung für Möbeltüren bekannt, die aus einem Rotationsdämpfer mit einem Dämpfungsfluid und einem Ritzel besteht, der mit einem Scharnier derart verbunden ist, dass das Ritzel mit einem Zahnstangenprofil oder Zähnen eines Anschlagteils des Scharniers kämmt. Bei einem Rotationsdämpfer dieser Art wird jedoch die Brems- oder Dämpfungskraft im wesentlichen nur durch die Molekularreibung des hochviskosen Mediums erreicht, mit dem der Rotationsdämpfer gefüllt ist, so dass dieser über den kleinen Winkelbereich, der dem Schließbereich einer Tür oder Klappe entspricht, nur eine verhältnismäßig geringe Dämpfungswirkung erbringt.

Aufgabe der Erfindung ist es daher, einen Schwenkdämpfer zu schaffen, der auch bei Beaufschlagung über kleine Winkelbereiche eine große Brems- und Dämpfungskraft erzeugt.

Erfindungsgemäß wird diese Aufgabe durch einen Schwenkdämpfer gelöst, der aus einem äußeren zylindrischen Körper, der einen relativ zu diesen drehbaren inneren Körper einfasst, besteht, wobei zwischen den beiden Körpern zwei durch einen Spalt oder eine Drosselstelle von einander getrennte, mit einer Flüssigkeit gefüllte Kammern vorhanden sind und die Flüssigkeit durch die relative Drehung der beiden Körper zueinander von einer Kammer in die andere verdrängt wird.

Der erfindungsgemäße Schwenkdämpfer vermag auch über kleine Schwenkwinkel große Bremskräfte zu entwickeln, weil die Dämpfungswirkung nicht nur durch die Molekularreibung in der Flüssigkeit, sondern insbesondere auch durch die Drosselung der Flüssigkeit beim Übertritt von der einen in die andere Kammer erreicht wird.

Nach einer bevorzugten Ausführungsform ist vorgesehen, dass die beiden relativ zueinander drehbaren Körper um eine gemeinsame Achse drehbar sind, dass der innere Körper über seinen Umfang einen zylindrischen Abschnitt mit größeren Radius und einen zylindrischen Abschnitt mit kleinerem Radius aufweist, dass der zylindrische Abschnitt mit größerem Radius an einer diesem angepassten Wand des äußeren Zylinders anliegt und zwischen dem zylindrischen Abschnitt mit kleinerem Radius und der Wand des äußeren Körpers ein schalenförmiger, die beiden Kammern enthaltender Raum gebildet ist, dass die Wand des äußeren Körpers parallel zu der Achse mit einer Einziehung versehen ist, deren Scheitelbereich mit dem zylindrischen Abschnitt mit kleinerem Radius einen Drosselspalt begrenzt, und dass die Endbereiche des zylinderen Abschnitts mit kleinerem Radius des inneren Körpers gegenüber dem äußeren Körper abgedichtet sind. Bei dieser Ausführungsform unterteilt die Einziehung an der inneren Wand des äußeren Körpers den schalenförmigen Raum in die beiden Kammern, wobei bei einer relativen Drehung der beiden Körper zueinander die Flüssigkeit durch den Drosselspalt von der einen Kammer in die andere Kammer unter Erzeugung der Dämpfungskraft übertritt.

Die Abdichtung einer Seite des schalenförmigen Raums kann aus einem sich über den Umfang des Abschnitts mit kleinerem Radius erstreckenden Teilringbund bestehen, dessen Radius dem Radius des Abschnitts mit größerem Radius entspricht und der angrenzend an die Einziehung an der zylindrischen Wand des äußeren Körpers anliegt.

Zur Abdichtung der anderen Seite des inneren Körpers gegenüber dem äußeren Körper kann der äußere Körper einen mit einer Bohrung versehenen Boden aufweisen, wobei in dem Kantenbereich des Bodens in einer Ausnehmung ein Dichtugngsring gehaltert ist, der an einer Stirnfläche des inneren Körpers anliegt.Stirnfläche des inneren Körpers anliegt.

In weiterer Ausgestaltung der Erfindung ist vorgesehen, dass der innere Körper an einem Ende mit einem Ringbund versehen ist, den ein erweiterter zylindrischer Abschnitt des äußeren Körpers einfasst, wobei der Ringbund gegenüber dem erweiterten zylindrischen Abschnitt durch einen Dichtungsring abgedichtet ist. Durch die beiden im Endbereich des inneren Körpers befindlichen Dichtungsringe ist der innere Körper gegenüber dem äußeren Körper abgedichtet, so dass die der Dämpfung dienende Flüssigkeit nicht austreten kann.

Zweckmäßigerweise erstrecken sich die zylindrischen Abschnitte des inneren Körpers mit größerem und kleineren Radius jeweils über 180°, so dass die Abschnitte durch Stufen von einander getrennt sind, die auf einer Durchmesserebene liegen.

Zweckmäßigerweise stützen sich die Stufen zwischen den zylinderschalenförmigen Abschnitten des inneren Körpers mit größerem und kleinerem Radius auf Anschläge ab, die durch Stufen beidseits der Einziehung des äußeren Körpers gebildet sind. Diese Anschläge bestimmen den Winkel, über den die beiden Körper relativ zueinander schwenkbar sind.

Nach einer bevorzugten Ausführungsform ist vorgesehen ,dass die Einziehung an der inneren Wand des äußeren Körpers im Durchmesser eine längere abgeschrägte Flanke und eine kürzere ausgekehlte Flanke aufweist. Diese Ausbildung der Flanken führt dazu, dass sich die Drehung des äußeren Körpers relativ zu dem inneren Körpers in Richtung der abgeschrägten Flanke mit kleinerem Widerstand durchführen lässt als in Gegenrichtung. Diese unterschiedlichen Widerstände sind zweckmäßig, um beispielsweise eine Tür mit einem geringeren Widerstand öffnen zu können als er beim zuschlagen im Schließbereich wirkt.

Zweckmäßigerweise ist zwischen dem äußeren Ringbund und dem Teilringbund des inneren Körpers eine Ringnut gebildet, die Dämpfungsflüssigkeit speichert.

Zwischen dem zylindrischen Abschnitt des inneren Körpers mit größerem Radius und der diesen einfassenden zylindrischen Wand des äußeren Körpers kann ein zweckmäßiges Spiel vorhanden sein. Da in dem ringförmigen Spalt zwischen dem inneren und dem äußeren Körper dämpfende Flüssigkeit vorhanden ist, ist deren Molekularreibung von der Größe des Spiels abhängig.

Um eine große Dämpfungswirkung zu erreichen, ist die dämpfende Flüssigkeit eine hochviskose Flüssigkeit. Die hochviskose Flüssigkeit besteht zweckmäßigerweise aus einem Fett.

Um den erfindungsgemäßen Schwenkdämpfer in einfacher Weise montieren zu können, kann der innere Körper undrehbar auf einer Achse gehalten sein.

In weiterer Ausgestaltung der Erfindung ist vorgesehen, dass die Achse undrehbar mit einem Scharnierteil verbunden und der äußere Körper mit einem Anschlag versehen ist, der das andere Scharnierteil über einen begrenzten Schwenkwinkel durch einen mit diesem verbundenen Gegenanschlag dämpft.

Handelt es sich bei dem Scharnier um ein Doppellenkerscharnier, kann der innere Körper an einem Scharnierarm eines Doppellenkerscharniers gehalten und ein Ende eines an dem Scharnierarm gelagerten Lenkers mit einem Gegenanschlag bildenden Fortsatz versehen sein, der mit mindestens einem Anschlag des äußeren Körpers zusammenwirkt. Zweckmäßigerweise ist der äußere Körper an einem Ende mit einem V-förmigen Anschlag versehen. Zusätzlich kann der äußere Körper an seinem gegenüberliegenden Ende mit zwei Anschlagnocken versehen sein, so dass der Lenker entsprechend mit zwei gegabelten Fortsätzen versehen sein kann. Ein Ausführungsbeispiel der Erfindung wird nachstehend an Hand der Zeichnung näher erläutert. ln dieser zeigt
- Figur 1: perspektivische Ansichten der auseinander gezogenen Teile des erfindungsgemäßen Schwenkdämpfers,
- Figur 2: einen Längsschnitt durch den Schwenkdämpfer nach Figur 1 in seinem montierten Zustand,
- Figur 3 und 4: Schnitte durch den Schwenkdämpfer längs der Linie A-A in Figur 2 in seinen Endlagen,
- Figur 5: einen den Figuren 3 und 4 entsprechenden Schnitt durch einen Schwenkdämpfer anderer Ausführungsform,
- Figur 6 bis 9: Längsschnitte durch ein Doppellenkerscharnier in unterschiedlichen Schwenklagen des verschwenkbaren topfförmigen Scharnierteils, der mit einem Schwenkdämpfer nach den Figuren 1 bis 5 versehen ist.

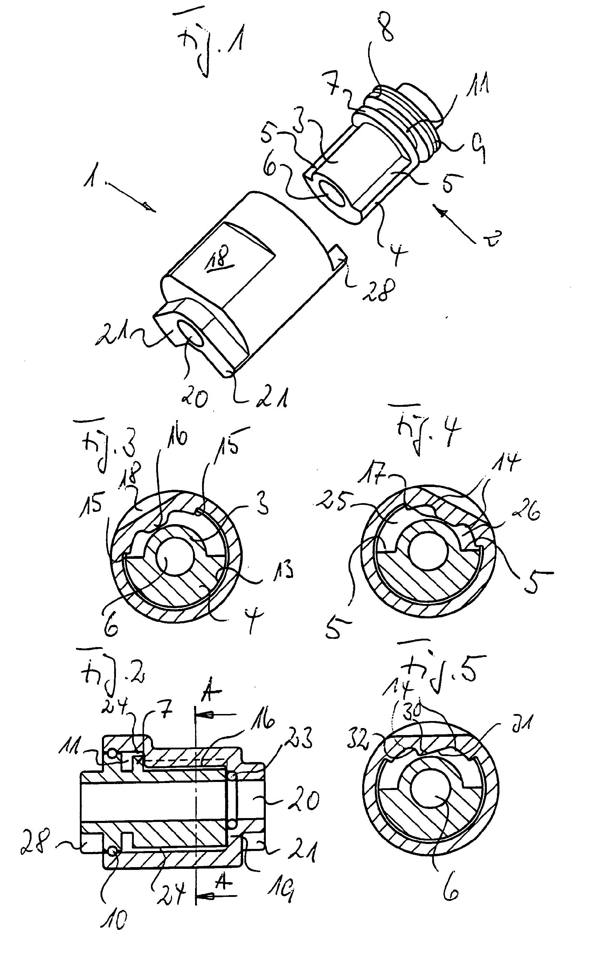

Der erfindungsgemäße Schwenkdämpfer besteht aus einem äußeren zylindrischen Körper 1, der einen relativ zu diesem drehbaren inneren Körper 2 einfasst, die in Figur 1 perspektivisch im auseinandergezogenen Zustand dargestellt sind.

Der innere Körper 2 weist einen Abschnitt auf, der aus zwei halbzylindrischen Schalen 3, 4 mit einem kleineren und einem größeren Radius besteht, die unter Bildung von Stufen 5, die auf einer Durchmesserebene liegen, von einander getrennt und konzentrisch zu einer zentralen Bohrung 6 sind. Der Abschnitt des inneren Körpers 2 mit den beiden zylindrischen Schalen 3, 4 wird von einem Teilringbund 7 begrenzt, dessen Radius der zylindrischen Schale 4 mit größerem Radius entspricht. An seinem dem Abschnitt 3, 4 gegenüberliegenden Ende ist der innere Körper 2 mit einem weiteren Ringbund 8 versehen, der mit einer über seinen Umfang verlaufenden Ringnut 9 versehen ist, in die ein Dichtungsring 10 eingesetzt ist. Zwischen dem Teilringbund 7 und dem Ringbund 8 ist eine Ringnut 11 ausgebildet.

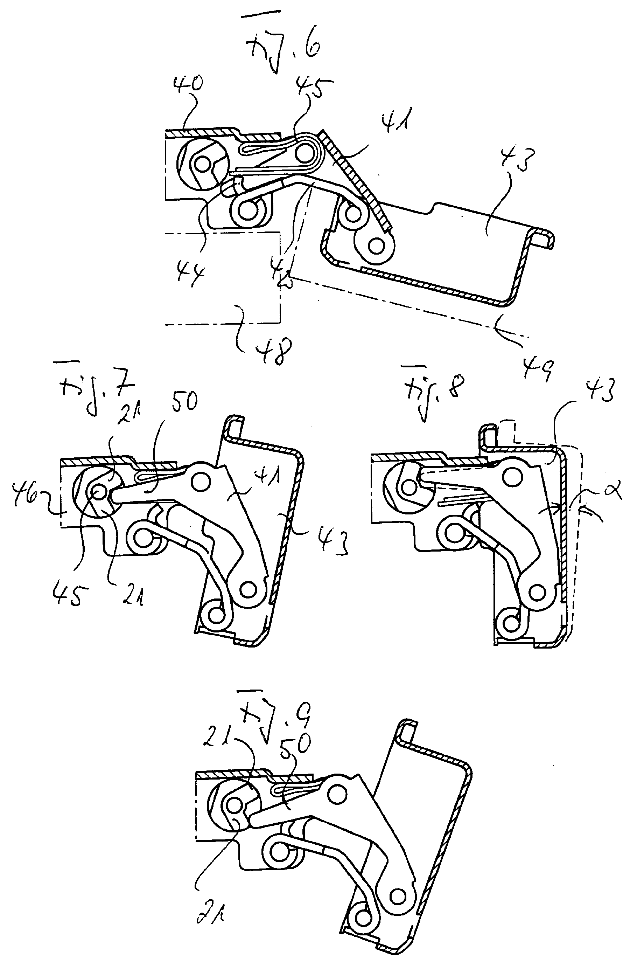

Der innere Körper 2 ist in der aus Figur 2 ersichtlichen Weise in den äußeren zylindrischen Körper 1 eingesetzt. Der äußere zylindrische Körper weist einen mittleren Abschnitt auf, der mit einer inneren zylindrischen Wandung 13 versehen ist, die sich im dargestellten Ausführungsbeispiel über einen Umfang von etwa 210° erstreckt. Zwischen diesem Umfangsbereich 13 besteht die innere Wandung aus einem Umfangsabschnitt 14, der von dem Umfangsabschnitt 13 durch in axialer Richtung verlaufende Stufen 15 getrennt ist. Zwischen diesen Stufen ist der Umfangsabschnitt 14 mit einer aus einer in axialer Richtung verlaufenden Wulst bestehenden Einziehung 16 versehen, die mit dem zylinderschalenförmigen Abschnitt 3 mit geringerem Radius einen Spalt 17 begrenzt. Mit Ihrer aus Figur 2 ersichtlichen linken Stirnseite liegt der mit der Einziehung 16 versehene Umfangsabschnitt 14 mit seiner Stirnseite an der rechten Flanke des Teilringbund 7 des inneren Körpers 2 an.

Im Bereich des mit der Einziehung 16 versehenen Umfangsabschnitts 14 ist der zylindrische Körper 1 auf seiner Außenseite mit einer den Abschnitt 14 eindrückenden Abflachung 18 versehen.

Der äußere zylindrische Körper 1 ist auf seiner aus Figur 2 ersichtlichen rechten Seite durch einen Boden 19 geschlossen, der mit einer Bohrung 20 versehen ist. Die Bohrung 20 ist von V-förmigen Rippen 21 eingefasst, die in der an Hand der Figuren 6 bis 9 beschriebenen Weise Anschläge bilden.

Die Bohrung 6 des inneren Körpers 2 fluchtet mit der Bohrung 20 und weist den gleichen Durchmesser auf.

Die aus Figur 2 ersichtliche rechte Seite des Abschnitt 14 mit der Einziehung 16 läuft in den mit der Bohrung 20 versehenen Boden 18 des äußeren zylindrischen Körpers 1 ein. Der Boden 19 ist in seinem mit der Bohrung 20 versehenen Kantenbereich mit einer Ausnehmung versehen, in der ein Dichtungsring 23 gehaltert ist, der dichtend an der Stirnseite des Abschnitts 3, 4 des inneren Körpers 2 anliegt.

Zwischen dem schalenförmigen Abschnitt 4 des innern Körpers 2 mit größerem Radius und dem Teilringbund 7 einerseits und dem diese Teile einfassenden zylindrischen Wandungsabschnitten der innen Wand des äußeren zylindrischen Körpers 1 andererseits sind Spalte 24 gebildet, die, wie auch die durch die Einziehung 16 getrennten Kammern 25, 26 des schalenförmigen Raums zwischen dem innern Körper 1 und dem äußeren Körper 2 und der Ringraum 11, mit einem Fett gefüllt sind. Der Ringraum 11 bildet dabei, wie aus Figur 2 ersichtlich ist, einen Speicher für das Fett.

Der äußere Ringbund 8 weist einen geringfügig größeren Durchmesser auf als der schalenförmige Körper 4 mit diesem fortsetzenden Ringbund 7 und ist an seiner Stirnfläche gegenüber der zylindrischen Innenwand des äußeren Körpers 1 durch eine Ringdichtung 10 abgedichtet.

An seinem aus Figur 2 ersichtlichen linken Ende ist der äußere zylindrische Körper mit axialen Fortsätzen 28 versehen, die den V-förmigen Rippen 21 entsprechende Anschläge bilden.

Die den inneren Abschnitt 14 mit der Einziehung 16 von dem zylindrischen Umfangsabschnitt 13 trennenden, axial verlaufenden Stufen 15 bilden Anschläge für die Stufen 5, die zwischen den halbzylindrischen Abschnitten 3, 4 des inneren Körpers 2 gebildet sind. Auf diese Weise lässt sich in dem dargestellten Ausführungsbeispiel der innere Körper 2 relativ zu dem äußeren Körper 1 um einen Winkel von etwa 60° schwenken.

Das Ausführungsbeispiel nach Figur 5 unterscheidet sich von dem nach den Figuren 3 und 4 dadurch, dass die Einziehung 30 des Wandungsabschnitt 14 auf einer Seite mit einer flachen schräg verlaufenden Flanke 31 und auf der anderen Seite der Scheitellinie mit einer Auskehlung 32 versehen ist.

Aus den Figuren 6 bis 9 ist ein übliches Doppellenkerscharnier ersichtlich, dessen Scharnierarm 40 durch die beiden Lenker 41, 42 mit einem verschwenkbaren Scharnierkopf 43 verbunden ist. Der innere Lenker 42 ist mit einer aus seinem inneren eingerollten Ende herausgebogenen Zunge 44 versehen, die in üblicher Weise mit einer doppellagigen haarnadelförmig gekrümmten Schließfeder 45 zusammen wirkt.

Die Besonderheit des Doppellenkerscharniers besteht darin, dass sie mit dem an Hand der Figur 1 bis 5 beschriebenen Schwenkdämpfer ausgestattet ist. Der Schwenkdämpfer ist auf einer Achse 45 angeordnet, die undrehbar zwischen den seitlichen Schenkeln 46 des U-förmigen Scharnierarms 40 gehalten ist. Die Achse 45 durchsetzt die Bohrung 6 des inneren Körpers 2 und die Bohrung 20 des äußeren Körpers 1. Der innere Körper 2 ist undrehbar mit der Achse 45, beispielsweise durch Stifte, verbunden, während der äußere zylindrische Körper 2 relativ zu den Bolzen 45 schwenkbar ist.

Im dargestellten Ausführungsbeispiel ist der Scharnierarm 40 mit einer Schrankwand oder einem Corpusteil 48 und der verschwenkbare Scharniertopf 43 mit einer Tür 49 verbunden. Um die Tür bei einem Zuschlagen zwischen den aus Figur 7 und Figur 8 ersichtlichen Schwenklagen des verschwenkbaren Scharnierteils 3 zu dämpfen, also über einen Winkelbereich a von etwa 5 bis 6°, ist der äußere aus einem U-förmig gebogenen Blechteil bestehende Scharnierarm 41 mit dessen Schenkel fortsetzenden gabelförmigen Hebeln 50 versehen, die in der dargestellten Weise mit den Anschläge bildenden Rippen 21 und Anschläge bildenden Vorsprüngen 28 des äußeren zylindrischen Körpers 1 in Berührung kommen.

Beim Öffnen der Tür 49 verschwenken die Hebel 50 den äußeren zylindrischen Körper 1 des Schwenkdämpfers in der aus den Figuren 6 und 9 ersichtlichen Weise im Uhrzeigersinn, so dass die Arme 50 von den Anschlägen 41, 28 abgleiten. Wird jedoch die Tür in der aus den Figuren 7 und 8 ersichtlichen Weise geschlossen, stoßen die Hebelarme 50 an die oberen Anschläge 41, 28 an, so dass die Tür im Schließbereich gedämpft wird und dadurch ein Zuschlagen der Tür mit kräftigem Stoß vermieden wird.

## Patentansprüche

1. Schwenkdämpfer,
**gekennzeichnet durch** einen äußeren zylindrischen Körper (1 ), der einen relativ zu diesem schwenkbaren inneren Körper (2) einfasst,
wobei zwischen den beiden Körpern (1, 2) zwei **durch** einen Spalt (17) oder eine Drosselstelle von einander getrennte, mit einer Flüssigkeit gefüllte Kammern (25, 26) vorhanden sind und die Flüssigkeit **durch** die relative Drehung der beiden Körper (1, 2) zueinander von einer Kammer in die andere verdrängt wird.

2. Schwenkdämpfer nach Anspruch 1, **dadurch gekennzeichnet,**
**dass** die beiden relativ zueinander verschwenkbaren Körper (1, 2) um eine gemeinsame Achse drehbar sind,
**dass** der innere Körper (2) über seinen Umfang einen zylindrischen Abschnitt (4) mit größerem Radius und einem zylindrischen Abschnitt (3) mit kleinerem Radius aufweist,
**dass** der zylindrische Abschnitt (4) mit größerem Radius an einer diesem angepassten zylindrischen Wand (13) des äußeren zylindrischen Körpers (1 ) anliegt und zwischen dem zylindrischen Abschnitt (3) mit kleinerem Radius und der Wand des äußeren Körpers (1 ) ein die beiden Kammern (25, 26) enthaltender schalenförmiger Raum gebildet ist,
**dass** die Wand des äußeren Körpers parallel zu der Achse mit einer Einziehung (13, 30)versehen ist, deren Scheitelbereich mit dem zylindrischen Abschnitt (3) mit kleinerem Radius einen Drosselspalt (17) begrenzt,
und **dass** die Endbereiche des zylindrischen Abschnitts (3) mit kleinerem Radius des inneren Körpers (2) gegenüber des äußeren Körpers (1 ) abgedichtet sind.

3. Schwenkdämpfer nach Anspruch 1 oder 2, **dadurch gekennzeichnet, dass** die Abdichtung einer Seite des schalenförmigen Raums (25, 26) aus seinem sich über den Umfang des Abschnitts (3) mit kleinerem Radius erstreckenden Teilringbund (7) besteht, dessen Radius dem Radius des Abschnitts mit größerem Radius (4) entspricht und der angrenzend an die Einziehung (16, 30) an der zylindrischen Wand (13) des äußeren Körpers (1 ) anliegt.

4. Schwenkdämpfer nach einem der Ansprüche 1 bis 3, **dadurch gekennzeichnet, dass** der äußere Körper (1 ) einen mit einer Bohrung (20) versehenen Boden (19) aufweist und in dem Kantenbereich des Bodens (19) in einer Ausnehmung ein Dichtungsring (23) gehaltert ist, der an einer Stirnfläche des inneren Körpers (2) anliegt.

5. Schwenkdämpfer nach einem der Ansprüche 1 bis 4, **dadurch gekennzeichnet, dass** der innere Körper (2) an einem Endbereich mit einem Ringbund (8) versehen ist, dessen Umfangsfläche gegenüber der zylindrischen Innenwand des äußeren Körpers (1 ) durch einen Dichtungsring (10) abgedichtet ist.

6. Schwenkdämpfer nach einem der Ansprüche 1 bis 5, **dadurch gekennzeichnet, dass** die zylindrischen Abschnitte (3, 4) des inneren Körpers (2) mit größerem und Kleineren Radius sich jeweils über 180° erstrecken.

7. Schwenkdämpfer nach einem der Ansprüche 1 bis 6, **dadurch gekennzeichnet, dass** sich die zwischen den zylindrischen Abschnitten (3, 4) des inneren Körpers mit größerem und kleineren Radius gebildeten Stufen (5) auf Anschläge abstützen, die durch Stufen (15) beidseits der Einziehung (16, 30) des äußeren Körpers (1 ) gebildet sind.

8. Schwenkdämpfer nach einem der Ansprüche 1 bis 7, **dadurch gekennzeichnet, dass** die Einziehung (30) an der inneren Wand des äußeren Körpers (1 ) im Querschnitt eine längere abgeschrägte Flanke (31 ) und eine kürzere ausgekehlte Flanke (32) aufweist.

9. Schwenkdämpfer nach einem der Ansprüche 1 bis 8, **dadurch gekennzeichnet, dass** der innere Körper (2) eine Bohrung (6) aufweist, die mit der Bohrung (20) in dem Boden (19) des äußeren Körpers (1 ) fluchtet.

10. Schwenkdämpfer nach einem der Ansprüche 1 bis 9, **dadurch gekennzeichnet, dass** zwischen dem äußeren Bund (8) und dem Teilbund (7) und dem zylinderschalenförmigen Abschnitt (4) mit größerem Radius des inneren Körpers eine Ringnut (11) gebildet ist.

11. Schwenkdämpfer nach einem der Ansprüche 1 bis 10, **dadurch gekennzeichnet, dass** zwischen dem zylindrischen Abschnitt (4) des inneren Körpers (2) mit größerem Radius und der diesen einfassenden zylindrischen Wand (13) des äußeren Körpers (1 ) ein Spiel (24) vorhanden ist.

12. Schwenkdämpfer nach einem der Ansprüche 1 bis 11, **dadurch gekennzeichnet, dass** die dämpfende Flüssigkeit eine hochviskose Flüssigkeit ist.

13. Schwenkdämpfer nach einem der Ansprüche 1 bis 12, **dadurch gekennzeichnet, dass** die hochviskose Flüssigkeit ein Fett ist.

14. Schwenkdämpfer nach einem der Ansprüche 1 bis 13, **dadurch gekennzeichnet, dass** der innere Körper (2) undrehbar auf einer Achse (45) gehalten ist.

15. Schwenkdämpfer nach einem der Ansprüche 1 bis 14, **dadurch gekennzeichnet, dass** die Achse (45) undrehbar mit einem Scharnierteil (40) verbunden und der äußere Körper (1 ) mit mindestens einem Anschlag (21, 28) versehen ist, der das andere Scharnierteil (43) über einen begrenzten Schwenkwinkel durch einen mit diesem verbundenen Gegenanschlag dämpft.

16. Schwenkdämpfer nach Anspruch 15, **dadurch gekennzeichnet, dass** der innere Körper (2) an dem Scharnierarm (40) eines Doppellenkerscharniers gehalten und ein Ende eines an dem Scharnierarm (40) gelagerten Lenkers (41 ) mit einem einen Gegenanschlag bildenden Fortsatz oder Hebelarm (50) versehen ist, der mit mindestens einem Anschlag (21, 28) des äußeren Körpers (1 ) zusammen wirkt.

17. Schwenkdämpfer nach Anspruch 15 oder 16, **dadurch gekennzeichnet, dass** der äußere Körper (1 ) an einem Ende mit V-förmigen Rippen (21) versehen ist, die Anschläge bilden.

18. Schwenkdämpfer nach Anspruch 17, **dadurch gekennzeichnet, dass** der äußere Körper (1 ) und seinem gegenüberliegenden Ende mit zwei Anschlagnocken (28) versehen ist.
